(19) Europäisches Patentamt
European Patent Office
Office européen des brevets

(11) **EP 4 365 917 A1**

(12) **EUROPEAN PATENT APPLICATION**
published in accordance with Art. 153(4) EPC

(43) Date of publication:
**08.05.2024 Bulletin 2024/19**

(21) Application number: **22833007.2**

(22) Date of filing: **24.06.2022**

(51) International Patent Classification (IPC):
**H01B 13/00** (2006.01)    **C01B 25/14** (2006.01)
**H01B 1/06** (2006.01)    **H01B 1/10** (2006.01)

(52) Cooperative Patent Classification (CPC):
**C01B 25/14; H01B 1/06; H01B 1/10; H01B 13/00;**
Y02E 60/10

(86) International application number:
**PCT/JP2022/025217**

(87) International publication number:
**WO 2023/276860 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 JP 2021109569**

(71) Applicant: **Idemitsu Kosan Co.,Ltd.**
**Tokyo 100-8321 (JP)**

(72) Inventors:
• **KIMPARA, Hironari**
**Tokyo 100-8321 (JP)**
• **TOTSUKA, Shota**
**Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR PRODUCING REFORMED SULFIDE SOLID ELECTROLYTE POWDER**

(57)    Provided includes a method of producing sulfide solid electrolyte that is enhanced in dispersibility and coatability through the reduction of the cohesive force of the sulfide solid electrolyte, without complicating the production process, including using a dry classifier, supplying a sulfide solid electrolyte to a gas flow having a dew point of -40°C or less and a flow rate of 1 m³/kg or more and 100 m³/kg or less per unit supply weight of the sulfide solid electrolyte inside the dry classifier, and fluidizing the sulfide solid electrolyte with the gas flow, and also provided includes modified sulfide solid electrolyte powder and modified sulfide solid electrolyte powder slurry.

[Fig. 1]

EP 4 365 917 A1

**Description**

Technical Field

The present invention relates to a method for producing modified sulfide solid electrolyte powder.

Background Art

With the rapid spread of information-related instruments and communication instruments, such as personal computers, video cameras, and mobile phones, in recent years, the development of batteries utilized as power sources therefor is considered to be important. While the batteries applied to the purpose have used an electrolytic solution containing a flammable organic solvent, development of a battery that has a solid electrolyte layer in place of the electrolytic solution is being made since the fully solid battery using no flammable organic solvent inside the battery can simplify the safety system and is excellent in production cost and productivity.

The sulfide solid electrolyte is demanded to have a high ionic conductivity. A method of controlling the crystal form or the particle diameter of a solid electrolyte to enhance the ionic conductivity thereof has been known (see PTL 1).

Citation List

Patent Literature

PTL 1: JP 2017-216062 A

Summary of Invention

Technical Problem

The present invention has been made under the circumstances, and an object thereof is to provide a method for producing modified sulfide solid electrolyte powder without complicating the production process, including using a dry classifier, supplying a sulfide solid electrolyte to a gas flow having a dew point of -40°C or less and a flow rate of 1 $m^3$/kg or more and 100 $m^3$/kg or less per unit supply weight of the sulfide solid electrolyte inside the dry classifier, and fluidizing the sulfide solid electrolyte with the gas flow, modified sulfide solid electrolyte powder, and a modified sulfide solid electrolyte powder slurry.

Solution to Problem

The present invention relates to
a method for producing modified sulfide solid electrolyte powder, including using a dry classifier, supplying a sulfide solid electrolyte to a gas flow having a dew point of -40°C or less and a flow rate of 1 $m^3$/kg or more and 100 $m^3$/kg or less per unit supply weight of the sulfide solid electrolyte inside the dry classifier, and fluidizing the sulfide solid electrolyte with the gas flow, modified sulfide solid electrolyte powder, and modified sulfide solid electrolyte slurry.

Advantageous Effects of Invention

The present invention can provide a method for producing modified sulfide solid electrolyte powder that is enhanced in dispersibility with other materials and coatability through the reduction of the cohesive force of the sulfide solid electrolyte, without complicating the production process. The modified sulfide solid electrolyte powder is excellent in dispersibility with other materials and coatability, and therefore is significantly useful as a raw material of a modified sulfide solid electrolyte slurry for forming a solid electrolyte layer or an electrode layer.

Brief Description of Drawings

Fig. 1 is flow diagram showing one example of a preferred embodiment of the production method of the present embodiment.
Fig. 2 is a flow diagram showing one example of a preferred embodiment used in the production method of the present embodiment.

Description of Embodiments

An embodiment of the present invention (which may be hereinafter referred to as a "present embodiment") will be described below. In the description herein, the upper limit values and the lower limit values relating to the numerical ranges, e.g., "or more", "or less", and "to", are numerical values that can be optionally combined, and the values in the examples can be used as the upper limit values and the lower limit values.

(Knowledge obtained by Present Inventors reaching Present Invention)

The present inventors have made earnest investigations for solving the problem, and consequently have found the following matters, and thus the present invention has been completed.

The production method described in PTL 1 is an invention that relates to a solid electrolyte, but does not relate to a sulfide solid electrolyte as in the present invention. Furthermore, the classification is performed by using a stainless steel sieve since the lithium ion diffusion coefficient is enhanced within the particular particle diameter range, but there is no investigation about the coatability of the solid electrolyte. In the production process of battery cells, it has been considered that coarse particles are necessarily removed for providing good coatability in forming a solid electrolyte layer by coating, but as for a sulfide solid electrolyte, it has been found that the coatability is not necessarily improved by removing coarse particles.

In view of the situation, the present inventors have focused on the cohesive force of the sulfide solid electrolyte, and have found that the dispersibility with other materials and the coatability on coating in the form of a solution or a slurry can be improved by fluidizing the sulfide solid electrolyte with a particular gas flow by using a dry classifier.

In the description herein, the "coarse particles" mean sulfide solid electrolyte powder having a particle diameter exceeding 20 $\mu$m including the solid electrolyte having a large particle diameter and secondary particles thereof formed in the production of the sulfide solid electrolyte. The particle diameter herein can be shown by a particle size distribution that can be measured, for example, by using a laser diffraction-scattering particle diameter measuring device, and the "coarse particles" mean particles that distribute in a region exceeding 20 $\mu$m. The coarse particles can also be confirmed by directly observing with an SEM, and mean particles having a particle diameter exceeding 20 $\mu$m. The coarse particles are defined by focusing on individual particles, and therefore do not mean an average particle diameter.

In the description herein, the "other materials" mean materials contained in a slurry used for forming a solid electrolyte layer or an electrode layer, except for the modified sulfide solid electrolyte powder, and for example, mean the solvent, the active substance, the binder, the conductive aid, and the like described later, for a slurry used for forming an electrode layer.

In the description herein, the "dispersibility" means the state of dispersion of the modified sulfide solid electrolyte with other materials in the modified sulfide solid electrolyte slurry described later. The expression "excellent in dispersibility" means that the modified sulfide solid electrolyte is dispersed uniformly with the other materials, and the state thereof are retained for a prolonged period of time. The dispersibility can be confirmed, for example, by the easiness of preparation of a slurry for evaluating coatability in the coatability evaluation described in the examples, the visual observation of the state, and the storage stability.

In the description herein, the "coatability" means the easiness of coating in coating a solution or a slurry, and the quality of the state of the coated surface. The expression that the modified sulfide solid electrolyte powder is "excellent in coatability" means that the workability of coating is excellent in coating a solution or a slurry containing the modified sulfide solid electrolyte powder, and furthermore the state of the coated surface is good. The coatability can be evaluated, for example, by the method described in the examples.

It has been found that in the method for producing modified sulfide solid electrolyte powder of the present embodiment, a sulfide solid electrolyte is fluidized with the gas flow under the particular requirement by using the dry classifier, and thereby the modified sulfide solid electrolyte powder that has a high ionic conductivity and is excellent in dispersibility with other materials and excellent in coatability can be produced without largely changing the ordinary production process.

The present embodiment is a significantly excellent production method since only by fluidizing the sulfide solid electrolyte with the gas flow, the dispersibility with other materials in forming a modified sulfide solid electrolyte slurry for forming a solid electrolyte layer or an electrode layer using the modified sulfide solid electrolyte powder is improved, and the coatability of the modified sulfide solid electrolyte slurry is enhanced.

While the reason for the reduction of the cohesive force of the sulfide solid electrolyte and the improvement of the dispersibility with other materials and the coatability in coating a solution or a slurry through the "fluidization with a gas flow" by using a dry classifier is not clear, a possible hypothesis is that the treatment with a gas flow having a low dew point at the prescribed flow rate or more by using a dry classifier introduces a gas having a low dew point to among the particles of the sulfide solid electrolyte, which changes the intermolecular force and the water adsorption state influencing the cohesive force of the sulfide solid electrolyte, resulting in the reduction of the cohesive force.

The methods of producing modified sulfide solid electrolyte powder according to the first to thirteenth embodiments of the present embodiment, the modified sulfide solid electrolyte powder according to the fourteenth to seventeenth embodiments of the present embodiment, and the modified sulfide solid electrolyte slurry according to the eighteenth embodiment of the present embodiment will be described below.

The method for producing modified sulfide solid electrolyte powder according to the first embodiment of the present embodiment is

a method for producing modified sulfide solid electrolyte powder, including using a dry classifier, supplying a sulfide solid electrolyte to a gas flow having a dew point of -40°C or less and a flow rate of 1 $m^3$/kg or more and 100 $m^3$/kg or less per unit supply weight of the sulfide solid electrolyte inside the dry classifier, and fluidizing the sulfide solid electrolyte with the gas flow.

The invention described in PTL 1 is not a production method relating to a sulfide solid electrolyte, and also is not a production method of fluidizing a solid electrolyte with a gas flow, A sulfide solid electrolyte involves a problem in cohesive force, and a uniform coated surface is difficult to obtain by coating a slurry thereof (i.e., poor coatability).

On the other hand, the first embodiment can produce a sulfide solid electrolyte that is enhanced in dispersibility with other materials and coatability through the reduction of the cohesive force of the sulfide solid electrolyte, without complicating the production process.

The first embodiment necessarily uses a dry classifier.

The use of a dry classifier and the fluidization of the sulfide solid electrolyte powder with the gas flow by using the dry classifier can allow the aerated bulk density, the packed bulk density, and the particle diameter of the produced modified sulfide solid electrolyte powder to be the particular ranges as described later. Furthermore, the cohesive force of the sulfide solid electrolyte is reduced to improve the dispersibility with other materials and the coatability.

The method for producing modified sulfide solid electrolyte powder according to the second embodiment of the present embodiment is the method for producing modified sulfide solid electrolyte powder according to the first embodiment, in which

the method for producing modified sulfide solid electrolyte powder includes pulverizing the sulfide solid electrolyte.

It is preferred that the sulfide solid electrolyte is pulverized and then fluidized with the gas flow since the cohesive force of the sulfide solid electrolyte is reduced while reducing the particle diameter thereof, and thereby the dispersibility with other materials and the coatability can be enhanced.

The method for producing modified sulfide solid electrolyte powder according to the third embodiment of the present embodiment is the method for producing modified sulfide solid electrolyte powder according to the first or second embodiment, in which

the sulfide solid electrolyte is supplied in the form of powder to the gas flow.

In supplying the sulfide solid electrolyte to the gas flow, it is preferred that the sulfide solid electrolyte in the form of powder is supplied to the gas flow. It is preferred that the sulfide solid electrolyte is fluidized in the form of powder with the gas flow since the cohesive force of the sulfide solid electrolyte can be reduced while reducing the particle diameter thereof, resulting in the enhancement of the dispersibility with other materials and the coatability.

The method for producing modified sulfide solid electrolyte powder according to the fourth embodiment of the present embodiment is the method for producing modified sulfide solid electrolyte powder according to any of the first to third embodiments, in which

the method for producing modified sulfide solid electrolyte powder further includes mixing a solid electrolyte raw material in a solvent to provide a raw material mixture, and heat-treating the raw material mixture.

It is preferred that the solid electrolyte raw material is mixed in a solvent since the atoms constituting the modified sulfide solid electrolyte powder are uniformly distributed to enhance the ionic conductivity. It is preferred that the resulting raw material mixture is heat-treated since the raw material mixture is crystallized to provide a crystalline sulfide solid electrolyte, which is used as the "sulfide solid electrolyte powder", so that the produced modified sulfide solid electrolyte powder can have a high ionic conductivity. In other words, the fourth embodiment shows an embodiment of a preferred production method of the "sulfide solid electrolyte".

The method for producing modified sulfide solid electrolyte powder according to the fifth embodiment of the present embodiment is the method for producing modified sulfide solid electrolyte powder according to any of the first to fourth embodiments, in which

the modified sulfide solid electrolyte powder is powder used for forming a solid electrolyte layer or an electrode layer.

The modified sulfide solid electrolyte powder produced by the present embodiment is preferred since the sulfide solid electrolyte slurry using the same described later is enhanced in dispersibility with other materials and coatability through the reduction of the cohesive force.

The modified sulfide solid electrolyte powder of the present embodiment can be favorably used as a modified sulfide solid electrolyte slurry for forming a solid electrolyte layer, as described later. There has been a modification method of a solid electrolyte by treating a sulfide solid electrolyte in the form of slurry by using a wet classifier, but not treating powder. In this method, however, it has been confirmed that the cohesive state is changed in drying and forming into powder, thereby failing to provide the same effect as in the modification in the present embodiment by the wet classifier, and the dispersibility with other materials and the coatability are deteriorated. In the present embodiment, the sulfide solid electrolyte is obtained in the form of powder after modifying to reduce the cohesive force of the sulfide solid electrolyte, and therefore the modified sulfide solid electrolyte slurry using the same is preferred since the dispersibility with other materials and the coatability are enhanced.

The method for producing modified sulfide solid electrolyte powder according to the sixth embodiment of the present embodiment is the method for producing modified sulfide solid electrolyte powder according to any of the first to fifth embodiments, in which

the gas flow is circulated.

Although the modified sulfide solid electrolyte powder can be produced while not circulating the gas flow, it is preferred that the gas flow is circulated as described later for reducing the amount of the gas flow having a low dew point used, resulting in the reduction of the production cost.

The method for producing modified sulfide solid electrolyte powder according to the seventh embodiment of the present embodiment is the method for producing modified sulfide solid electrolyte powder according to any of the first to sixth embodiments, in which

the modified sulfide solid electrolyte powder is powder of a solid electrolyte containing a lithium atom, a phosphorus atom, and a sulfur atom.

It is preferred that the modified sulfide solid electrolyte powder is powder of a solid electrolyte containing a lithium atom, a phosphorus atom, and a sulfur atom from the standpoint achieving the solid electrolyte having a high ionic conductivity.

The method for producing modified sulfide solid electrolyte powder according to the eighth embodiment of the present embodiment is the method for producing modified sulfide solid electrolyte powder according to the seventh embodiment, in which

the modified sulfide solid electrolyte powder is powder of a solid electrolyte further containing a halogen atom.

It is preferred as described later that the modified sulfide solid electrolyte powder further contains a halogen atom from the standpoint of improving the ionic conductivity of the modified sulfide solid electrolyte powder.

The method for producing modified sulfide solid electrolyte powder according to the ninth embodiment of the present embodiment is the method for producing modified sulfide solid electrolyte powder according to any of the first to eighth embodiments, in which

the modified sulfide solid electrolyte powder is modified sulfide solid electrolyte powder containing an argyrodite type crystal structure.

It is preferred as described later that the modified sulfide solid electrolyte powder contains an argyrodite type crystal structure from the standpoint of improving the ionic conductivity thereof.

The method for producing modified sulfide solid electrolyte powder according to the tenth embodiment of the present embodiment is the method for producing modified sulfide solid electrolyte powder according to any of the first to ninth embodiments, in which

the gas flow is a gas flow of an inert gas.

As described later, a sulfide solid electrolyte generates hydrogen sulfide through the contact with water, resulting in change of the composition thereof and also the change of the crystal structure thereof, and thereby the ionic conductivity thereof is decreased. While the present embodiment restricts the dew point in consideration of this, it is preferred that a gas flow of an inert gas is used as the gas flow from the standpoint of achieving the solid electrolyte having a high ionic conductivity by preventing the reaction with the sulfide solid electrolyte from occurring.

The method for producing modified sulfide solid electrolyte powder according to the eleventh embodiment of the present embodiment is the method for producing modified sulfide solid electrolyte powder according to any of the first to tenth embodiments, in which

the modified sulfide solid electrolyte powder has a particle diameter of 0.1 $\mu$m or more and 10.0 $\mu$m or less.

In the method for producing modified sulfide solid electrolyte powder of the present embodiment, the particle diameter of the powder obtained through the modification can be appropriately selected by changing the condition. It is preferred that the particle diameter is 0.1 $\mu$m or more and 10.0 $\mu$m or less for removing coarse particles, which is preferred from the standpoint of achieving a uniform solid electrolyte layer or electrode layer since the dispersibility with other components (such as an active substance) is enhanced, and the coatability of the slurry is also enhanced.

In the description herein, the particle diameter can be determined by the method described in the examples, and for example, can be shown by the particle size distribution that can be measured by using a laser diffraction-scattering particle diameter distribution measuring device.

The average particle diameter ($D_{50}$) in the particle diameter distribution is designated as the particle diameter. This definition is not applied to the description relating to the coarse particles as described above.

The method for producing modified sulfide solid electrolyte powder according to the twelfth embodiment of the present embodiment is the method for producing modified sulfide solid electrolyte powder according to any of the first to eleventh embodiments, in which

the modified sulfide solid electrolyte powder has a degree of compaction ((degree of compaction) = ((packed bulk density)-(aerated bulk density))/(packed bulk density)) of 0.400 or more.

In the present embodiment, the degree of compaction of the powder obtained through the modification can be appropriately selected by changing the condition, and it is preferred that the degree of compaction is 0.400 or more from the standpoint of achieving the solid electrolyte having a high ionic density.

It is preferred that the bulk density is allowed to be within the particular range since the dispersibility with other components (such as an active substance) is increased, and the compact can be formed with a high degree of compaction in forming an electrode layer, resulting in the enhancement of the energy density of a lithium ion battery cell formed therewith.

The aerated bulk density and the packed bulk density can be determined, for example, by the method described in the examples.

The method for producing modified sulfide solid electrolyte powder according to the thirteenth embodiment of the present embodiment is the method for producing modified sulfide solid electrolyte powder according to any of the first to twelfth embodiments, in which

the modified sulfide solid electrolyte powder has an aerated bulk density of 0.050 g/cm$^3$ or more and 1.000 g/cm$^3$ or less.

It is preferred that the aerated bulk density of the powder obtained through the modification is 0.050 g/cm$^3$ or more and 1.000 g/cm$^3$ or less from the standpoint of producing the sulfide solid electrolyte enhanced in coatability through the reduction of the cohesive force of the sulfide solid electrolyte.

The modified sulfide solid electrolyte powder according to the fourteenth embodiment of the present embodiment is

modified sulfide solid electrolyte powder having a degree of compaction shown by the following expression of 0.400 or more.

((Degree of compaction) = ((packed bulk density)-(areated bulk density))/(packed bulk density))

It is preferred that the degree of compaction of the modified sulfide solid electrolyte powder is 0.400 or more since the dispersibility with other materials and the coatability are enhanced through the reduction of the cohesive force of the sulfide solid electrolyte.

The packed bulk density and the aerated bulk density can be determined, for example, by the method described in the examples.

The modified sulfide solid electrolyte powder according to the fifteenth embodiment of the present embodiment is the modified sulfide solid electrolyte powder according to the fourteenth embodiment, in which

the modified sulfide solid electrolyte powder has an aerated bulk density of 0.050 g/cm$^3$ or more and 1.000 g/cm$^3$ or less.

It is preferred that the aerated bulk density of the modified sulfide solid electrolyte powder is 0.050 g/cm$^3$ or more and 1.000 g/cm$^3$ or less since the degree of compaction can be allowed to be 0.400 or less, and the dispersibility and the coatability of the sulfide solid electrolyte can be enhanced through the reduction of the cohesive force thereof.

The modified sulfide solid electrolyte powder according to the sixteenth embodiment of the present embodiment is the modified sulfide solid electrolyte powder according to the fourteenth or fifteenth embodiment, in which

the modified sulfide solid electrolyte powder has a particle diameter of 0.1 $\mu$m or more and 10.0 $\mu$m or less.

It is preferred that the particle diameter of the modified sulfide solid electrolyte powder is 0.1 $\mu$m or more and 10.0 $\mu$m or less since the degree of compaction can be allowed to be 0.400 or more, and the cohesive force of the sulfide solid electrolyte can be reduced.

The modified sulfide solid electrolyte powder according to the seventeenth embodiment of the present embodiment is the modified sulfide solid electrolyte powder according to any of the fourteenth to sixteenth embodiments, in which the modified sulfide solid electrolyte powder contains an argyrodite type crystal structure.

As described above in the ninth embodiment of the present embodiment, it is preferred as described later that the modified sulfide solid electrolyte powder contains an argyrodite type crystal structure from the standpoint of improving the ionic conductivity thereof.

The modified sulfide solid electrolyte slurry according to the eighteenth embodiment of the present embodiment is

a modified sulfide solid electrolyte slurry for forming a solid electrolyte layer, containing the modified sulfide solid electrolyte powder according to any of the fourteenth to seventeenth embodiments.

The modified sulfide solid electrolyte slurry is preferred since a uniform solid electrolyte layer can be formed by coating using the same. The modified sulfide solid electrolyte slurry will be described later. The modified sulfide solid electrolyte can form a slurry excellent in coatability due to the excellent dispersibility with other materials thereof.

The method for producing modified sulfide solid electrolyte powder of the present embodiment, the modified sulfide solid electrolyte powder of the present embodiment, and the modified sulfide solid electrolyte slurry for forming a solid electrolyte layer or an electrode layer of the present embodiment will be described in more detail below with reference to the embodiments described above.

[Method for producing modified sulfide solid electrolyte powder]

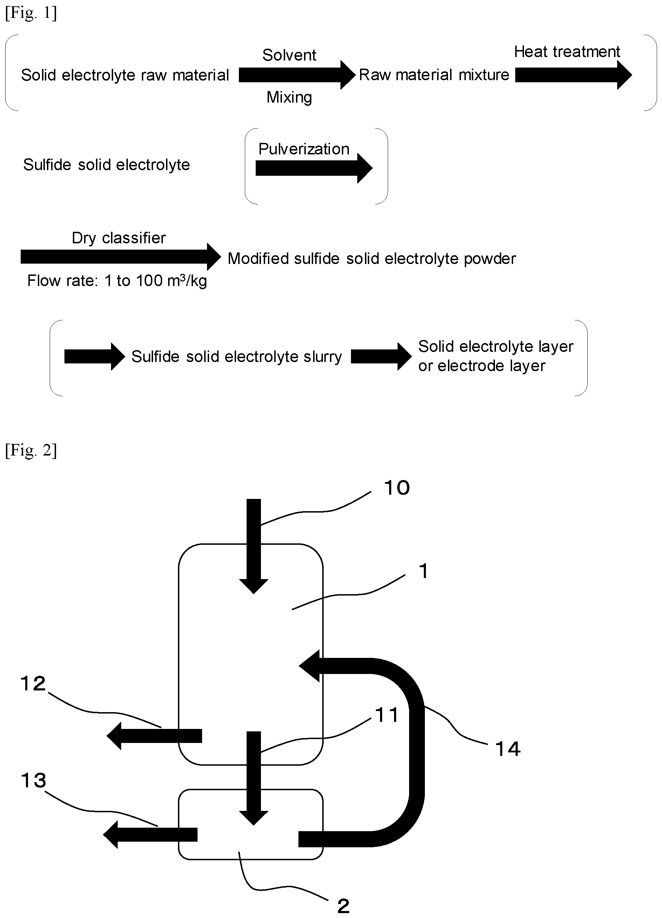

The method for producing modified sulfide solid electrolyte powder of the present embodiment necessarily includes, as illustrated in Fig. 1, using a dry classifier, supplying a sulfide solid electrolyte to a gas flow having a dew point of -40°C or less and a flow rate of 1 m$^3$/kg or more and 100 m$^3$/kg or less per unit supply weight of the sulfide solid electrolyte inside the dry classifier, and fluidizing the sulfide solid electrolyte with the gas flow (which may also be hereinafter referred to as "modification").
The fluidization (modification) performed modifies the sulfide solid electrolyte to provide the "modified sulfide solid electrolyte powder".

<Fluidizing Sulfide Solid Electrolyte with Gas Flow by using Dry Classifier>

In the method for producing modified sulfide solid electrolyte powder of the present embodiment, the "fluidizing the sulfide solid electrolyte with the gas flow by using the dry classifier" necessarily includes allowing the sulfide solid electrolyte described later and the gas flow described later to flow by using the dry classifier described later. According to the configuration, the cohesive force of the sulfide solid electrolyte is reduced, and thereby the dispersibility with other materials and the coatability in coating in the form of a solution or a slurry are improved.

(Fluidizing with Gas Flow)

The method for producing modified sulfide solid electrolyte powder of the present embodiment necessarily includes supplying to the gas flow described later having a dew point of -40°C or less and a flow rate of 1 m$^3$/kg or more and 100 m$^3$/kg or less per unit supply weight of the sulfide solid electrolyte inside the dry classifier, and fluidizing the sulfide solid electrolyte powder with the gas flow. The sulfide solid electrolyte powder is preferably supplied in the form of powder to the gas flow.
In the method for producing modified sulfide solid electrolyte powder of the present embodiment, the "fluidizing with the gas flow" means fluidization inside the dry classifier. The fluidization modifies the sulfide solid electrolyte powder to form the modified sulfide solid electrolyte powder. The resulting modified sulfide solid electrolyte powder is enhanced in dispersibility and coatability through the reduction of the cohesive force of the sulfide solid electrolyte.
The gas flow is preferably a gas flow of an inert gas for preventing the sulfide solid electrolyte powder from being denatured.
The inert gas is preferably nitrogen gas or argon gas from the standpoint of the availability.
In the case where the dew point (dew point temperature) exceeds -40°C, the sulfide solid electrolyte powder is denatured as described above. The dew point is more preferably -45°C or less, and further preferably -50°C or less, from the standpoint of reducing the cohesive force of the sulfide solid electrolyte, and the lower limit value thereof is not particularly limited, and is more preferably -90°C or more, and further preferably -80°C or more, from the standpoint of the productivity.
The pressure can be appropriately selected depending on the apparatus used for the production, which may be performed without controlling the pressure inside the dry classifier, and may be performed under reduced pressure or increased pressure.
The flow rate of the gas flow is determined depending on the supply amount of the sulfide solid electrolyte powder supplied to the dry classifier in consideration of the effect of modification. In view of the "fluidization with the gas flow", the gas flow (flow speed) is an extent that at least allows the powder to move with the gas flow.
The flow rate per unit supply weight of the sulfide solid electrolyte powder ((flow rate)/(supply speed), m$^3$/kg) is necessarily 1 m$^3$/kg or more and 100 m$^3$/kg or less. In the case where the flow rate per unit supply weight of the sulfide solid electrolyte powder is smaller than the range, the modification cannot be performed sufficiently, and the cohesive force of the sulfide solid electrolyte cannot be reduced to fail to enhance the dispersibility and the coatability. The upper limit thereof is not particularly limited, and the flow rate is more preferably 2 m$^3$/kg or more and 80 m$^3$/kg or less, further preferably 5 m$^3$/kg or more and 60 m$^3$/kg or less, still further preferably 10 m$^3$/kg or more and 50 m$^3$/kg or less, still more further preferably 15 m$^3$/kg or more and 45 m$^3$/kg or less, and even further preferably 18 m$^3$/kg or more and 42 m$^3$/kg or less, from the standpoint of the restriction in designing the apparatus and the productivity.

(Fluidization)

The fluidization under the dew point and pressure condition at the flow rate described above is necessarily performed by using a dry classifier from the standpoint of reducing the cohesive force of the sulfide solid electrolyte.

The dry classifier is classified depending on the principle thereof into gravitational classification, inertia classification, and centrifugal classification. Any type of the classification methods may be used, and centrifugal classification is preferred from the standpoint of reducing the cohesive force of the sulfide solid electrolyte. The centrifugal classification is further classified into a free vortex type, such as a helical vortex gas flow, a vortex gas flow (without a guide blade), and a vortex gas flow (with a guide blade), and a forced vortex type, such as a gas flow classification chamber rotation type and a gas flow rotary vane type, and a classifier of a vortex gas flow (with a guide blade) type or a gas flow rotary vane type is preferred from the standpoint of the efficiency of classification, the regulation of the classification point, the attachment inside the device (i.e., the enhancement of the recovery rate), and the simplicity of the apparatus.

The use of the dry classifier fluidizes the sulfide solid electrolyte in the form of powder with the gas flow, thereby resulting in the modified sulfide solid electrolyte powder.

On the other hand, wet classification cannot be performed in a gas, and cannot reduce the cohesive force of the sulfide solid electrolyte as in the method for producing modified sulfide solid electrolyte powder of the present embodiment although the classification can be achieved thereby to uniform the particle diameter.

The supply speed of the sulfide solid electrolyte powder is preferably 0.1 kg/h or more, more preferably 0.2 kg/h or more, and further preferably 0.3 kg/h or more, from the standpoint of improving the dispersibility with other materials and the coatability of the sulfide solid electrolyte through the modification. The upper limit of the supply speed is not limited, and can be set within a range that can be achieved by the flow rate per unit supply weight in the invention of the present application. A continuous system is preferred rather than a batch system from the standpoint of the stability in modification and the productivity, and the sulfide solid electrolyte is preferably supplied continuously at a constant rate.

The modified sulfide solid electrolyte powder of the present embodiment is preferably powder of a solid electrolyte containing a lithium atom, a phosphorus atom, and a sulfur atom for enhancing the ionic conductivity, and is preferably powder of the solid electrolyte containing further containing a halogen atom for further enhancing the ionic conductivity, as similar to the sulfide solid electrolyte described later. A lithium atom is preferably contained as an atom that exerts an ionic conductivity, and thus the sulfide solid electrolyte has an ionic conductivity.

In the description herein, the "sulfide solid electrolyte" means an electrolyte that is a sulfide and retains a solid state in a nitrogen atmosphere at 25°C.

A "solid electrolyte" is roughly classified into an amorphous solid electrolyte and a crystalline solid electrolyte, and a crystalline solid electrolyte is preferred for enhancing the ionic conductivity.

In the description herein, the "crystalline sulfide solid electrolyte" means a solid electrolyte that has a peak derived from the solid electrolyte in the X-ray diffraction pattern in an X-ray diffractometry, in which the presence or absence of a peak derived from the raw material of the solid electrolyte is not limited. Specifically, the crystalline sulfide solid electrolyte contains a crystal structure derived from the solid electrolyte, in which a part thereof may be the crystal structure derived from the solid electrolyte, or the entire thereof may be the crystal structure derived from the solid electrolyte. The crystalline sulfide solid electrolyte may contain an amorphous solid electrolyte as a part thereof, as far as having the X-ray diffraction pattern described above. Accordingly, the crystalline sulfide solid electrolyte encompasses so-called glass ceramics obtained by heating an amorphous solid electrolyte to a crystallization temperature or more.

In the description herein, the amorphous solid electrolyte means a solid electrolyte that has a halo pattern having substantially no peak other than the peaks derived from the raw materials observed in the X-ray diffraction pattern in an X-ray diffractometry, in which the presence or absence of a peak derived from the raw material of the solid electrolyte is not limited.

The modified sulfide solid electrolyte powder is preferably powder of a solid electrolyte that contains an argyrodite type crystal structure, for enhancing the ionic conductivity and improving the coatability.

The sulfide solid electrolyte and the modified sulfide solid electrolyte powder each may be any of an amorphous sulfide solid electrolyte and a crystalline sulfide solid electrolyte, and each are preferably a crystalline sulfide solid electrolyte for enhancing the ionic conductivity in the case of using as a modified sulfide solid electrolyte slurry for forming a solid electrolyte layer as described later. Accordingly, the raw material mixture described later may be heat-treated for crystallization, a sulfide solid electrolyte may be heat-treated for crystallization, and the modified sulfide solid electrolyte powder may be heat-treated for crystallization.

Whether the solid electrolyte is a crystalline solid electrolyte can be determined by the measurement result of an X-ray diffractometry, $^{31}$P-NMR, or the like. For example, in the case where the X-ray diffraction pattern in the X-ray diffractometry has a peak derived from the solid electrolyte observed, and particularly in the case where the crystal structure is an argyrodite type crystal structure, such as $Li_6PS_5X$ and $Li_{7-x}PS_{6-x}X_x$ (X= Cl, Br, or I, x= 0.0 to 1.8), the solid electrolyte can be said to be a crystalline solid electrolyte. The diffraction peaks of the argyrodite type crystal structure appear around $2\theta$ = 15.3°, 17.7°, 31.1°, 44.9°, and 47.7°. In addition, in the case where the crystallinity degree

measured by $^{31}$P-NMR is 80% or more, the solid electrolyte can be said to be a crystalline solid electrolyte. Specifically, the crystallinity degree is a value measured in such a manner that a solid $^{31}$P-NMR spectrum is measured, the resonance line observed at 70 to 120 ppm in the resulting spectrum is isolated to Gaussian curves by the non-linear least-squares method, and the area ratio of the curves is obtained.

The particle diameter, the aerated bulk density, and the packed bulk density of the modified sulfide solid electrolyte powder can be regulated by appropriately selecting the condition in fluidizing with the gas flow and regulating the classification point.

The particle diameter of the powder obtained through the modification can be determined, for example, by the method described in the examples, and it is preferred that the condition in fluidizing with the gas flow is regulated to make a particle diameter of 0.1 μm or more and 10.0 μm or less, more preferably 0.3 μm or more and 9.0 μm or less, further preferably 0.5 μm or more and 8.0 μm or less, and still further preferably 0.6 μm or more and 6.0 μm or less, from the standpoint of enhancing the dispersibility and the coatability through the reduction of the cohesive force of the sulfide solid electrolyte.

The aerated bulk density of the modified sulfide solid electrolyte powder obtained through the modification can be determined, for example, by the method described in the examples, and it is preferred that the condition in fluidizing with the gas flow is regulated to make an aerated bulk density of 0.050 g/cm$^3$ or more and 1.000 g/cm$^3$ or less, more preferably 0.100 g/cm$^3$ or more and 0.500 g/cm$^3$ or less, and further preferably 0.200 g/cm$^3$ or more and 0.300 g/cm$^3$ or less, from the standpoint of enhancing the dispersibility and the coatability of the modified sulfide solid electrolyte powder through the reduction of the cohesive force thereof.

The packed bulk density of the modified sulfide solid electrolyte powder obtained through the modification can be determined, for example, by the method described in the examples, and it is preferred that the condition of the flow rate is regulated to make a packed bulk density of 0.050 g/cm$^3$ or more and 1.000 g/cm$^3$ or less, more preferably 0.100 g/cm$^3$ or more and 0.800 g/cm$^3$ or less, and further preferably 0.300 g/cm$^3$ or more and 0.600 g/cm$^3$ or less, from the standpoint of enhancing the dispersibility with other materials and the coatability of the modified sulfide solid electrolyte powder through the reduction of the cohesive force thereof.

The degree of compaction calculated from the packed bulk density and the aerated bulk density ((degree of compaction) = ((packed bulk density)-(aerated bulk density))/(packed bulk density)) is a value that can be used as an index of the cohesive force reduction effect of the sulfide solid electrolyte through the modification. A degree of compaction of 0.400 or more means that the gas used in the gas flow is sufficiently introduced to the modified sulfide solid electrolyte powder, which is preferred due to the large cohesive force reduction effect obtained thereby. The lower limit value of the degree of compaction is more preferably 0.430 or more, and further preferably 0.450 or more. The upper limit value thereof is not particularly limited, and the degree of compaction obtained by the method for producing modified sulfide solid electrolyte powder of the present embodiment is generally preferably 0.800 or less, more preferably 0.700 or less, and further preferably 0.600 or less.

In the dry classifier, for example, it is preferred that as shown in a classifier 1 shown in Fig. 2, the modified sulfide solid electrolyte powder 13 is recovered with a bag filter 2, and the gas flow after recovering the modified sulfide solid electrolyte powder is again returned as a circulated gas flow 14 to the classifier, so as to circulate the gas flow, for retaining the pressure of the dry classifier and for enhancing the recovery rate. The recovered coarse particles 12 can be used again as the sulfide solid electrolyte after pulverization described later.

(Preparation Method of Sulfide Solid Electrolyte)

As shown in Fig. 1, the sulfide solid electrolyte preferably includes mixing a solid electrolyte raw material containing a lithium atom, a phosphorus atom, and a sulfur atom in a solvent to provide a raw material mixture (mixing step), and heat-treating the raw material mixture (crystallizing step). The sulfide solid electrolyte may be directly fluidized with the gas flow, and it is preferred that the sulfide solid electrolyte is pulverized and then fluidized with the gas flow since the particle diameter of the sulfide solid electrolyte powder can be reduced.

(Solid Electrolyte Raw Material)

The solid electrolyte raw material used in the present embodiment is preferably a raw material containing one kind of an atom selected from a lithium atom, a phosphorus atom, a sulfur atom, and depending on necessity a halogen atom, from the standpoint of providing the sulfide solid electrolyte containing a lithium atom, a phosphorus atom, a sulfur atom, and depending on necessity a halogen atom, and it suffices that a lithium atom, a phosphorus atom, a sulfur atom, and depending on necessity a halogen atom are contained by using one kind or a combination of multiple kinds of raw materials.

Examples of the raw material include lithium sulfide (Li$_2$S) and phosphorus sulfide, such as diphosphorus trisulfide (P$_2$S$_3$) and diphosphorus pentasulfide (P$_2$S$_5$).

Lithium sulfide is preferably in the form of particles.

The average particle diameter of the lithium sulfide particles is preferably 0.1 $\mu$m or more and 300 $\mu$m or less, more preferably 1 $\mu$m or more and 100 $\mu$m or less, further preferably 3 $\mu$m or more and 50 $\mu$m or less, and particularly preferably 5 $\mu$m or more and 30 $\mu$m or less. In the description herein, the average particle diameter is a particle diameter on the particle diameter distribution cumulative curve, at which the value cumulated from the side of the particle having the smallest particle diameter reaches 50% of the total, and the volume distribution is an average particle diameter that can be measured, for example, by using a laser diffraction-scattering particle diameter distribution measuring device. The other solid raw materials used in the method for producing modified sulfide solid electrolyte powder of the present embodiment each preferably have an average particle diameter that is equivalent to the lithium sulfide particles described above, i.e., an average particle diameter that is within the same range of the average particle diameter of the lithium sulfide particles.

The solid electrolyte raw material is preferably a raw material containing a halogen atom from the standpoint of enhancing the ionic conductivity.

Representative examples of the raw material containing a halogen atom include a raw material containing at least two kinds of atoms selected from the aforementioned four kinds of atoms, i.e., a lithium atom, a phosphorus atom, a sulfur atom, and a halogen atom, which is more preferably used, for example, a lithium halide, such as lithium fluoride, lithium chloride, lithium bromide, and lithium iodide; a phosphorus halide, such as various kinds of phosphorus fluoride (such as $PF_3$ and PFs), various kinds of phosphorus chloride (such as $PCl_3$, $PCl_5$, and $P_2Cl_4$), various kinds of phosphorus bromide (such as $PBr_3$ and $PBr_5$), and various kinds of phosphorus iodide (such as $PI_3$ and $P_2I_4$); and a thiophosphoryl halide, such as thiophosphoryl fluoride ($PSF_3$), thiophosphoryl chloride ($PSCl_3$), thiophosphoryl bromide (PSBn), thiophosphoryl iodide ($PSI_3$), thiophosphoryl dichloride fluoride ($PSCl_2F$), and thiophosphoryl dibromide fluoride ($PSBr_2F$), and a halogen elemental substance, such as fluorine ($F_2$), chlorine ($Cl_2$), bromine ($Br_2$), and iodine ($I_2$), and preferably chlorine ($Cl_2$), bromine ($Br_2$), and iodine ($I_2$).

Examples of a material that can be used as the raw material other than those described above include a raw material that contains at least one kind of an atom selected from a lithium atom, a phosphorus atom, and a sulfur atom, and also contains an atom other than these three kinds of atoms, and more specific examples thereof include a lithium compound, such as lithium oxide, lithium hydroxide, and lithium carbonate; an alkali metal sulfide, such as sodium sulfide, potassium sulfide, rubidium sulfide, and cesium sulfide; a metal sulfide, such as silicon sulfide, germanium sulfide, boron sulfide, gallium sulfide, tin sulfide (such as SnS and $SnS_2$), aluminum sulfide, and zinc sulfide; a phosphoric acid compound, such as sodium phosphate and lithium phosphate; a halide of an alkali metal other than lithium, for example, a sodium halide, such as sodium iodide, sodium fluoride, sodium chloride, and sodium bromide; a metal halide, such as an aluminum halide, a silicon halide, a germanium halide, an arsenic halide, a selenium halide, a tin halide, an antimony halide, a tellurium halide, and a bismuth halide; and a phosphorus oxyhalide, such as phosphorus oxychloride ($POCl_3$) and phosphorus oxybromide ($POBr_3$).

The raw material mixture containing a lithium atom, a phosphorus atom, and a sulfur atom obtained in the mixing step described later is preferably a raw material mixture containing a $PS_4^{3-}$ structure from the standpoint of enhancing the ionic conductivity, and while describing in detail later, examples of the raw material mixture containing a $PS_4^{3-}$ structure include $PS_4^{3-}$ structures, such as amorphous $Li_3PS_4$, crystalline $Li_3PS_4$, and a complex that provides amorphous $Li_3PS_4$ or crystalline $Li_3PS_4$ through the complexolysis. In addition to these $PS_4^{3-}$ structures, examples thereof also include an unreacted solid electrolyte raw material (a raw material mainly containing a halogen atom) and a mixture capable of containing a raw material containing a halogen atom mixed after the complexing step described later or the like. In the description herein, the raw material mixture containing $PS_4^{3-}$ structure may also be referred to as "$PS_4^{3-}$ structure and the like".

In this case, the raw material used is preferably lithium sulfide ($Li_2S$) and phosphorus sulfide, such as diphosphorus trisulfide ($P_2S_3$) and diphosphorus pentasulfide ($P_2S_5$), among the above.

In this case, the mixing ratio of lithium sulfide and phosphorus sulfide is not particularly limited, as far as falling within a rage of the ratio capable of forming the $PS_4^{3-}$ structure, and in the case where diphosphorus pentasulfide is used as the phosphorus sulfide, the proportion of the molar number of lithium sulfide with respect to the total molar number of lithium sulfide and diphosphorus pentasulfide is preferably in a range of 60% or more and 90% or less, more preferably in a range of 65% or more and 85% or less, further preferably in a range of 70% or more and 80% or less, further preferably in a range of 72% or more and 78% or less, and particularly preferably in a range of 73% or more and 77% or less, from the standpoint of forming the $PS_4^{3-}$ structure efficiently.

In the method for producing modified sulfide solid electrolyte powder of the present embodiment, it is preferred to use a raw material containing a halogen atom, in addition to lithium sulfide ($Li_2S$) and phosphorus sulfide, such as diphosphorus trisulfide ($P_2S_3$) and diphosphorus pentasulfide ($P_2S_5$), from the standpoint of facilitating the formation of the $PS_4^{3-}$ structure, enhancing the ionic conductivity, and the like. In the case where the raw material containing a halogen atom is used, in the present mixing step, the raw material containing a halogen atom used in addition to the raw material containing a lithium atom, a phosphorus atom, and a sulfur atom, such as lithium sulfide and phosphorus sulfide, is preferably a lithium halide, such as lithium fluoride, lithium chloride, lithium bromide, and lithium iodide, or a halogen elemental substance, such as fluorine ($F_2$), chlorine ($Cl_2$), bromine ($Br_2$), and iodine ($I_2$), in which the lithium halide is preferably lithium chloride, lithium bromide, or lithium iodide, and more preferably lithium chloride or lithium bromide, and the halogen elemental substance is preferably chlorine ($Cl_2$), bromine ($Br_2$), or iodine ($I_2$), and more preferably chlorine ($Cl_2$) or bromine ($Br_2$).

In the case where the raw material containing a halogen atom is used, preferred examples of the combination of raw materials include a combination of lithium sulfide, diphosphorus pentasulfide, and a lithium halide, a combination of lithium sulfide, diphosphorus pentasulfide, and a halogen elemental substance, and a combination of lithium sulfide, diphosphorus pentasulfide, a lithium halide, and a halogen elemental substance, in which a combination of lithium sulfide, diphosphorus pentasulfide, and a lithium halide, and a combination of lithium sulfide, diphosphorus pentasulfide, and a halogen elemental substance are more preferred, and a combination of lithium sulfide, diphosphorus pentasulfide, and a lithium halide is further preferred.

In this case, the lithium halide is preferably lithium chloride, lithium bromide, and lithium iodide, and more preferably lithium chloride and lithium bromide, and the halogen elementary substance is preferably chlorine, bromine, and iodine, and more preferably chlorine and bromine.

In the case where the raw material containing a halogen atom is used, it suffices that the raw material containing a halogen atom is mixed in the present mixing step, and the material may be mixed initially with lithium sulfide, diphosphorus pentasulfide, and the like, and may also be mixed after the complexing step described later. In this case, the raw material containing a halogen atom may be mixed after synthesizing the $PS_4^{3-}$ structure with lithium sulfide and phosphorus sulfide in the present mixing step.

The mixing ratio of the raw material containing a halogen atom in the case where the raw material is used will be described later.

(Mixing Step)

The mixing of the solid electrolyte raw materials (mixing step) may be performed, for example, by using a mixer, and may also be performed by using an agitator, a pulverizer, or the like since the use of an agitator may cause mixing of the solid electrolyte raw materials, and the pulverizer causes pulverization of the solid electrolyte raw materials, and simultaneously causes mixing thereof. In other words, it can be said that the sulfide can be performed by subjecting two or more kinds of solid electrolyte raw materials selected from a compound containing at least one atom of a lithium atom, a sulfur atom, a phosphorus atom, and preferably a halogen atom, to agitation, mixing, pulverization, or a treatment combining any of them.

In the present mixing step, the solid electrolyte raw materials may be directly mixed to provide the raw material mixture, or the solid electrolyte raw materials may be mixed in a solvent to provide the raw material mixture, and mixing with the complexing agent described later may also be included.

Examples of the agitator and the mixer include a mechanical agitation type mixer capable of performing agitation (which may also be referred to as mixing by agitation, or agitation-mixing) with an impeller provided in a reaction tank. Examples of the mechanical agitation type mixer include a high-speed agitation type mixer and a double arm type mixer. Examples of the high-speed agitation type mixer include a vertical axis rotation type mixer and a horizontal axis rotation type mixer, and a mixer of any type may be used.

Examples of the shape of the impeller used in the mechanical agitation type mixer include a blade type, an arm type, an anchor type, a paddle type, a full-zone type, a ribbon type, a multistage blade type, a twin arm type, a shovel type, a biaxial vane type, a flat vane type, and a C-type vane type, in which a shovel type, a flat vane type, a C-type vane type, an anchor type, a paddle type, and a full-zone type are preferred, and an anchor type, a paddle type, and a full-zone type are more preferred, from the standpoint of accelerating the reaction of the raw materials more efficiently.

In the case where the mechanical agitation type mixer is used, the rotation number of the impeller may be appropriately regulated depending on the capacity of the fluid in the reaction tank, the temperature, and the shape of the impeller with no particular limitation, may be generally approximately 5 rpm or more and 400 rpm or less, and is preferably 10 rpm or more and 300 rpm or less, more preferably 15 rpm or more and 250 rpm or less, and further preferably 20 rpm or more and 200 rpm or less, from the standpoint of accelerating the reaction of the raw materials more efficiently.

The temperature condition in mixing with the mixer is not particularly limited, and for example, is generally -30 to 120°C, preferably -10 to 100°C, more preferably 0 to 80°C, and further preferably 10 to 60°C. The mixing time is generally 0.1 to 500 hours, and is preferably 1 to 450 hours, more preferably 10 to 425 hours, further preferably 20 to 400 hours, and still further preferably 40 to 375 hours, from the standpoint of further homogenizing the dispersion state of the solid electrolyte raw materials and accelerating the reaction.

The method of performing mixing associated with pulverization with a pulverizer is a method that has been used as a solid phase method (mechanical milling method). Examples of the pulverizer used include a medium type pulverizer using a pulverization medium.

The medium type pulverizer is roughly classified into a container driving type pulverizer and a medium agitation type pulverizer. Examples of the container driving type pulverizer include a ball mill and a bead mill, which each are provided with an agitation tank, a pulverization tank, or a combination thereof. Examples of the medium agitation type pulverizer include various pulverizers, for example, an impact type pulverizer, such as a cutter mill, a hammer mill, and a pin mill; a tower type pulverizer, such as a tower mill; an agitation tank type pulverizer, such as an attritor, an aquamizer, and a sand grinder; a flow tank type pulverizer, such as a visco mill and a pearl milk a flow tube type pulverizer; an annular pulverizer, such as a co-ball-mill; a continuous dynamic type pulverizer: and a single screw or multiple screw kneader. Among these, a ball mill and a bead mill, which are exemplified as the container driving type pulverizer, are preferred, in which a planetary type is preferred, in consideration of the easiness in regulating the particle diameter of the resulting sulfide, and the like.

These pulverizers may be appropriately selected depending on the desired scale and the like, in which a container driving type pulverizer, such as a ball mill and a bead mill, may be used for a relatively small scale, and other types of pulverizers may also be used for a large scale or a mass production scale.

For a liquid state or a slurry state associated with a liquid, such as a solvent, in mixing as described later, a wet pulverizer capable of performing wet pulverization is preferably used.

Representative examples of the wet pulverizer include a wet bead mill, a wet ball mill, and a wet vibration mill, and a wet bead mill using beads as a pulverization medium is preferred since a condition of a pulverizing operation can be freely adjusted and a smaller particle diameter can be easily achieved thereby. A dry pulverizer, for example, a dry medium type pulverizer, such as a dry bead mill, a dry ball mill, and a dry vibration mill, and a dry non-medium type pulverizer, such as a jet mill, may also be used.

In the case where the object to be mixed is in a liquid state or a slurry state, a flow type pulverizer capable of performing a circulation operation for circulating the object depending on necessity may also be used. Specific examples thereof include a pulverizer performing circulation between a pulverizer for pulverizing a slurry (pulverization mixer) and a temperature keeping tank (reaction vessel).

The size of the beads or balls used in the ball mill or the bead mill may be appropriately selected depending on the target particle diameter, the throughput, and the like. For example, the diameter of the beads is generally 0.05 mm or more, preferably 0.1 mm or more, and more preferably 0.3 mm or more, and the upper limit thereof is generally 5.0 mm or less, preferably 3.0 mm or less, and more preferably 2.0 mm or less. The diameter of the balls is generally 2.0 mm or more, preferably 2.5 mm or more, and more preferably 3.0 mm or more, and the upper limit thereof is generally 20.0 mm or less, preferably 1 5.0 mm or less, and more preferably 10.0 mm or less.

Examples of the material therefor include a metal, such as stainless steel, chromium steel, and tungsten carbide; ceramics, such as zirconia and silicon nitride; and a mineral, such as agate.

The rotation number in the case where a ball mill or a bead mill is used cannot be determined unconditionally since the rotation number may vary depending on the scale to be treated, and is generally 10 rpm or more, preferably 20 rpm or more, and more preferably 50 rpm or more, and the upper limit thereof is generally 1,000 rpm or less, preferably 900 rpm or less, more preferably 800 rpm or less, and further preferably 700 rpm or less.

The pulverization time in this case cannot be determined unconditionally since the pulverization time may vary depending on the scale to be treated, and is generally 0.5 hour or more, preferably 1 hour or more, more preferably 5 hours or more, and further preferably 10 hours or more, and the upper limit thereof is generally 100 hours or less, preferably 72 hours or less, more preferably 48 hours or less, and further preferably 36 hours or less.

The mixing, agitation, and pulverization, and a treatment combining any of them each can be performed while selecting the size and the material of the medium used (such as beads or balls), the rotation number of the rotor, and the treatment time, and thereby the particle diameter of the resulting sulfide can be regulated.

(Solvent)

In the mixing the solid electrolyte raw materials, a solvent may be added to the solid electrolyte raw materials, followed by mixing. The solvent used may be various solvents, which are widely referred to as organic solvents.

The solvent used may be a wide variety of solvents that have been used in the production of solid electrolytes, and examples thereof include a hydrocarbon solvent, such as an aliphatic hydrocarbon solvent, an alicyclic hydrocarbon solvent, and an aromatic hydrocarbon solvent.

Examples of the aliphatic hydrocarbon include hexane, pentane, 2-ethylhexane, heptane, octane, decane, undecane, dodecane, and tridecane, examples of the alicyclic hydrocarbon include cyclohexane and methylcyclohexane, and examples of the aromatic hydrocarbon solvent include benzene, toluene, xylene, mesitylene, ethylbenzene, tert-butylbenzene, trifluoromethylbenzene, and nitrobenzene.

Examples of the solvent also include a solvent containing an atom other than a carbon atom and a hydrogen atom, for example, a hetero atom such as a nitrogen atom, an oxygen atom, a sulfur atom and a halogen atom, in addition to the hydrocarbon solvent shown above. Preferred examples of this type of solvent include an ether solvent and an ester solvent, and also include an alcohol-based solvent, an aldehyde-based solvent, and a ketone-based solvent, which contain an oxygen atom as the hetero atom.

Preferred examples of the ether solvent include an aliphatic ether, such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; an alicyclic ether, such as ethylene oxide, propylene oxide, tetrahydrofuran, tetrahydropyran, dimethoxytetrahydrofuran, cyclopentyl methyl ether, and dioxane; a heterocyclic ether, such as furan, benzofuran, and benzopyran; and an aromatic ether, such as methyl phenyl ether (anisole), ethyl phenyl ether, dibenzyl ether, and diphenyl ether.

Preferred examples of the ester solvent include an alipliatic ester, such as methyl formate, ethyl formate, methyl acetate, ethyl acetate, propyl acetate, isopropyl acetate, methyl propionate, ethyl propionate, dimethyl oxalate, diethyl oxalate, dimethyl malonate, diethyl malonate, dimethyl succinate. and diethyl succinate; an alicyclic ester, such as methyl cyclohexanecarboxylate, ethyl cyclohexanecarboxylate, and dimethyl cyclohexanedicarboxylate; a heterocyclic ester, such as methyl pyridinecarboxylate, methyl pyrimidinecarboxylate, acetolactone, propiolactone, butyrolactone, and valerolactone; and an aromatic ester, such as methyl benzoate, ethyl benzoate, dimethyl phthalate, diethyl phthalate, butyl benzyl phthalate, dicyclohexyl phthalate, trimethyl trimellitate, and triethyl trimellitate.

Preferred examples of the solvent also include an alcohol-based solvent, such as ethanol and butanol; an aldehyde-based solvent, such as formaldehyde, acetaldehyde, and dimethylformamide; and a ketone-based solvent, such as acetone and methyl ethyl ketone.

Examples of the solvent containing a nitrogen atom as the hetero atom include a solvent having a group containing a nitrogen atom, such as an amino group, an amide group, a nitro group, and a nitrile group.

Preferred examples of the solvent having an amino group include an aliphatic amine, such as ethylenediamine, diaminopropane, dimethylethylenediamine, diethylethylenediamine, dimethyldiaminopropane, tetramethyldiaminomethane, tetramethylethyl enediamine (TMEDA), and tetramethyldiaminopropane (TMPDA); an alicyclic amine, such as cyclopropanediamine, cyclohexanediamine, and bisaminomethylcyclohexane; a heterocyclic amine, such as isophoronediamine, piperazine, dipyperidylpropane, and dimethylpiperazine; and an aromatic amine, such as phenyldiamine, tolylenediamine, naphthalenediamine, methylphenylenediamine, dimethylnaphthalenediamine, dimethytphenytenediamine, tetramethylphenylenediamine, and tetramethylnaphthalenediamine.

Preferred examples of the solvent also include a solvent containing a nitrogen atom, such as dimethylformamide, acetonitrile, acrylonitrile, and nitrobenzene.

Preferred examples of the solvent containing a halogen atom as the hetero atom include dichloromethane, chlorobenzene, trifluoromethylbenzene, chlorobenzene, chlorotoluene, and bromobenzene.

Preferred example of the solvent containing a sulfur atom include dimethylsulfoxide and carbon disulfide.

In the case where the solvent is used, the amount of the solvent used is preferably 100 mL or more, more preferably 200 mL or more, further preferably 250 mL or more, and still further preferably 300 mL or more, per 1 kg in total of the solid electrolyte raw materials, and the upper limit thereof is preferably 3,000 mL or less, more preferably 2,500 mL or less, further preferably 2,000 mL or less, and still further preferably 1,550 mL or less. In the case where the amount of the solvent used is in the range, the solid electrolyte raw materials can be reacted efficiently.

In the case where the solvent is used, the drying step described later is preferably performed.

(Complexing Step)

In the mixing step, the solid electrolyte raw materials and a complexing agent may be mixed in a liquid phase. The mixing step in the method for producing modified sulfide solid electrolyte powder of the present embodiment is a step that is capable of including the present complexing step of mixing the electrolyte raw materials and a complexing agent in a liquid phase, and also is capable of including the drying step, the step of heating other than the heating step (crystallizing step), the pulverizing step, and the like described later. In the description herein, the complexing agent is a substance capable of forming a complex with a lithium atom, and means a substance that reacts with the sulfide containing a lithium atom contained in the solid electrolyte raw material, so as to facilitate the formation of a precursor containing a lithium atom, a sulfur atom, and a phosphorus atom, preferably the $PS_4^{3-}$ structure. The complex obtained through the complex forming with the lithium atom is a complex containing a lithium atom, a sulfur atom, a phosphorus atom, and the complexing agent, and preferably a complex that provides amorphous $Li_3PS_4$ or crystalline $Li_3PS_4$ through the complexolysis, and amorphous $Li_3PS_4$ or crystalline $Li_3PS_4$ as the $PS_4^{3-}$ structure can be obtained by removing the complexing agent from the complex (which may be hereinafter referred simply to as "complexolysis").

The complexing agent used may be any compound with not particular limitation, as far as having the aforementioned properties. Preferred examples thereof include a compound containing an atom having high affinity with a lithium atom, for example, a hetero atom, such as a nitrogen atom, an oxygen atom, and a chlorine atom, and more preferred examples thereof include a compound having a group containing these hetero atoms, since these hetero atoms and the group containing these hetero atoms are capable of coordinating (bonding) to lithium.

Preferred examples of the hetero atom include a nitrogen atom, an oxygen atom, and a halogen atom, such as a chlorine atom, and preferred examples of the complexing agent include a compound containing these atoms.

Specific examples thereof include an ester-based solvent, such as ethyl acetate and butyl acetate; an aldehyde-based solvent, such as formaldehyde, acetaldehyde, and dimethylformamide; a ketone-based solvent, such as acetone and methyl ethyl ketone: an ether-based solvent, such as diethyl ether, diisopropyl ether, dibutyl ether, tetrahydrofuran, dimethoxyethane, cyclopentyl methyl ether, tert-butyl methyl ether, and anisole; a halogen atom-containing aromatic hydrocarbon solvent, such as trifluoromethylbenzene, nitrobenzene, chlorobenzene, chlorotoluene, and bromobenzene: an amine-based solvent, such as tetramethylethylenediamine, tetraethylethylenediamine. tetramethyldiaminopropane, tetraethyldiaminopropane, cyclopropanediamine, tolyelendiamine, and tetraethylenepentamine: a nitrile-based solvent, such as acetonitrile, methoxyacetonitrile, propionitrile, methoxypropionitrile, and benzonitrile: and a solvent containing a carbon atom and a hetero atom, such as dimethylsulfoxide and carbon disulfide.

Among these, the complexing agent is preferably an amine-based solvent, an ether-based solvent, and a nitrile-based solvent, and more preferably an ether-based solvent, in which diethyl ether, diisopropyl ether, dibutyl ether, and tetrahydrofuran are preferred, and tetrahydrofuran is more preferred. The complexing agent is preferably a compound that has a property that does not dissolve or is hard to dissolve the solid electrolyte raw materials, and an amine-based solvent and an ether-based solvent are preferred from this standpoint. The use of the solvent of this type provides the precursor through the reaction of the raw materials by the heterogeneous method in the liquid phase method, which facilitates the formation of the precursor as a single compound, resulting in the enhancement of the ionic conductivity.

In addition to the complexing agent, various kinds of the solvents described above can be used.

In the case where the solid electrolyte raw materials and the complexing agent are mixed in a liquid phase, the amount of the complexing agent used with respect to the solid electrolyte raw materials is preferably 1% by mass or more and 50% by mass or less, more preferably 2% by mass or more and 30% by mass or less, further preferably 3% by mass or more and 20% by mass or less, and still further preferably 5% by mass or more and 15% by mass or less, in terms of content of the solid electrolyte raw materials in the liquid phase.

The precursor containing a lithium atom, a sulfur atom, and a phosphorus atom, preferably the precursor containing the $PS_4^{3-}$ structure (such as the $PS_4^{3-}$ structure) can be synthesized by mixing the solid electrolyte raw materials and the complexing agent, and can also be synthesized, for example, by pulverization, kneading, or a combination combining them, in addition to the mixing. The treatments, such as mixing, pulverization, and kneading, are phenomena that can simultaneously occur, and therefore cannot be clearly distinguished from each other in some cases. That is because in mixing the raw materials in the form of solid or powder exemplified as the raw materials capable of being contained in the solid electrolyte raw materials, there may be a case where kneading occurs, or simultaneously there may be a case where pulverization or kneading through collision of the solid electrolyte raw materials occurs, and there may also be a case where the pulverization functions as mixing and kneading. The synthesis of the precursor in the present mixing step can be understood that a force of rotation, vibration, and the like is applied to the raw materials contained in the solid electrolyte raw materials, so as to repeat contact and the like of the raw materials, and the contact may be performed associated with other treatments, i.e., any treatment of pulverization, kneading, and the like, as far as at least the treatment by mixing is included. The aforementioned treatment in the complexing step is a treatment that is performed in the complexing step as one embodiment of the mixing for providing the precursor containing the $PS_4^{3-}$ structure, such as the complex containing a lithium atom, a sulfur atom, a phosphorus atom, and the complexing agent, and is different from the pulverizing step described later for pulverizing the precursor obtained in the complexing step.

In the method for producing modified sulfide solid electrolyte powder of the present embodiment, the mixing, the pulverization, the kneading, and the treatment combining them can be performed similarly to the mixing step described above.

In the complexing step, a treatment using a mechanical agitation mixer is preferably used from the standpoint of synthesizing more efficiently the precursor containing the $PS_4^{3-}$ structure (such as the $PS_4^{3-}$ structure), particularly the complex containing a lithium atom, a sulfur atom, a phosphorus atom, and the complexing agent, and preferably the complex providing amorphous $Li_3PS_4$ or crystalline $Li_3PS_4$ through the complexolysis. This is also preferred from the standpoint of the production efficiency. On the other hand, from the same standpoint, in the complexing step, it is preferred not to use as much as possible a device that has been referred ordinarily to as a pulverizer, for example, a medium type pulverizer, such as a ball mill and a bead mill, and a medium type agitation pulverizer, a kneader, and the like.

The temperature in the synthesis of the precursor in the complexing step is not particularly limited, and may be regulated, for example, to within a range of 20 to 100°C. While the temperature may be approximately room temperature (23°C), heating may be used for accelerating the synthesis reaction within a short period of time, and a higher temperature is preferred, as far as being a condition without drying, such as refluxing. The temperature may be, for example, 50 to 90°C, and preferably approximately 80°C.

The period of time of the synthesis may be approximately 0.5 to 100 hours, and is preferably 1 to 90 hours, and more preferably 3 to 75 hours, in consideration of the production efficiency.

What is obtained through the synthesis is the precursor containing a lithium atom, a sulfur atom, and a phosphorus atom, i.e., the complex containing a lithium atom, a sulfur atom, a phosphorus atom, and the complexing agent, and preferably the complex providing amorphous $Li_3PS_4$ or crystalline $Li_3PS_4$ through the complexolysis.

The resulting complex may be subjected to the drying step described later, and then appropriately heated for the complexolysis to form the sulfide solid electrolyte.

(Drying Step)

The mixing step may include a step of drying (which may be hereinafter referred simply to as a "drying step") for removing the solvent. In the case where the sulfide solid electrolyte containing the solvent is obtained in the mixing step, the drying step is preferred since the sulfide solid electrolyte in the form of powder can be obtained thereby. The present drying step is a step that is different from the step of fluidizing with the gas flow in the method for producing modified sulfide solid electrolyte powder of the present embodiment. The present drying step may be associated with the modification, but is for the purpose of removing the solvent, which is different from the modification.

In the case where the slurry containing the complex is obtained as described above, the solvent may be removed from the slurry by drying in the drying step, so as to provide the sulfide solid electrolyte.

The drying may be performed for the fluid obtained in the mixing step at a temperature corresponding to the kind of the solvent.

The drying may be performed by evaporating the solvent through drying under reduced pressure (vacuum drying) with a vacuum pump or the like at a temperature of generally 5 to 300°C, preferably 10 to 250°C, more preferably 15 to 230°C, and further preferably approximately room temperature (23°C) (for example, room temperature approximately ±5°C) to 220°C.

The drying may be performed for the fluid by filtration using a glass filter or the like, solid-liquid separation by decantation, or solid-liquid separation using a centrifugal separator or the like.

The solid-liquid separation may be easily performed specifically in such a manner that the fluid is placed in a vessel, and after the solid matter settles, the solvent as the supernatant (which may contain the complexing agent in some cases) is removed by decantation or by filtering with a glass filter having a pore size of approximately 10 to 200 μm, and preferably 20 to 150 μm.

(Heating)

In the method for producing modified sulfide solid electrolyte powder of the present embodiment, the raw material mixture (including the amorphous sulfide solid electrolyte and the amorphous modified sulfide solid electrolyte powder) is preferably converted to the crystalline sulfide solid electrolyte through a heat treatment (crystallizing step). In particular, the raw material mixture that has no argyrodite type crystal structure is preferably heated to convert to have the argyrodite type crystal form.

The heating may be performed by one step, or may be performed as two-step heating including calcination and then firing at a temperature higher than the calcination.

It is preferred that the amorphous sulfide solid electrolyte and the amorphous modified sulfide solid electrolyte powder are crystallized to form the crystalline sulfide solid electrolyte and the crystalline modified sulfide solid electrolyte powder, or the crystallization of the crystalline sulfide solid electrolyte and the crystalline modified sulfide solid electrolyte powder is further promoted.

In the case where the solid electrolyte raw material is complexed, the complexolysis, i.e., the removal of the complexing agent from the solid electrolyte raw material complexed with the complexing agent, is preferably performed by the heat treatment.

In the case where the amorphous raw material mixture (including the amorphous sulfide solid electrolyte and the amorphous modified sulfide solid electrolyte powder, which is the same as in the section (Heating)) is heated to provide the crystalline sulfide solid electrolyte (or the crystalline modified sulfide solid electrolyte powder), the heating temperature may be determined corresponding to the structure of the crystalline sulfide solid electrolyte. Specifically, the amorphous raw material mixture is subjected to differential thermal analysis (DTA) under a heating condition of 10°C/min with a differential thermal analysis equipment (DTA equipment), and the temperature may be in a range of preferably 5°C or more, more preferably 10°C or more, and further preferably 20°C or more, above the peak top temperature of the exothermic peak observed on the lowermost temperature side. The upper limit thereof is not particularly limited, and may be approximately 40°C. With the temperature range, the crystalline sulfide solid electrolyte (crystalline modified sulfide solid electrolyte powder) can be provided more efficiently and securely. The heating temperature for providing the crystalline sulfide solid electrolyte (crystalline modified sulfide solid electrolyte powder) cannot be determined unconditionally since the temperature varies depending on the structure of the resulting crystalline sulfide solid electrolyte (crystalline modified sulfide solid electrolyte powder), and is generally preferably 130°C or more, more preferably 135°C or more, and further preferably 140°C or more, and the upper limit thereof is not particularly limited, and is preferably 300°C or less, more preferably 280°C or less, and further preferably 250°C or less.

The heating time is not particularly limited, as far as being a period of time capable of providing the target crystalline sulfide solid electrolyte (crystalline modified sulfide solid electrolyte powder), and for example, is preferably 1 minute or more, more preferably 10 minutes or more, further preferably 30 minutes of more, and still further preferably 1 hour or more. The upper limit of the heating time is not particularly limited, and is preferably 24 hours or less, more preferably 10 hours or less, further preferably 5 hours or less, and still further preferably 3 hours or less.

The heating is preferably performed in an inert gas atmosphere (such as a nitrogen atmosphere and an argon atmosphere) or in a reduced pressure atmosphere (particularly in vacuum), for preventing the deterioration (for example, oxidation) of the complexolysis product and the crystalline sulfide solid electrolyte from occurring. The method of heating is not particularly limited, and examples thereof include methods using a hot plate, a vacuum heating device, an argon gas atmosphere furnace, and a firing furnace. In addition, industrially, a lateral dryer, a lateral vibration fluid dryer, or the like provided with a heating means and a feed mechanism may be selected for use according to the heating treatment amount.

In the case where the raw material mixture is complexed, the heating step included removes the complexing agent in the raw material mixture, so as to provide the raw material mixture containing a lithium atom, a sulfur atom, a phosphorus atom, and depending on necessity a halogen atom (complexolysis). The removal of the complexing agent in the complexed raw material mixture can be clarified by the establishment of the cocrystal of the raw material mixture from the result of the X-ray diffraction pattern, the gas chromatography analysis, or the like, and in addition, can be confirmed by the fact that the solid electrolyte obtained by removing the complexing agent by heating the complexed raw material mixture has the same X-ray diffraction pattern as a solid electrolyte obtained by the ordinary method without the use of a complexing agent.

(Pulverization)

The method for producing modified sulfide solid electrolyte powder of the present embodiment preferably includes pulverizing the sulfide solid electrolyte produced in the aforementioned production method, and it is preferred that after pulverizing, the sulfide solid electrolyte is fluidized with the gas flow, from the standpoint of enhancing the dispersibility and the coatability through the reduction of the cohesive force of the modified sulfide solid electrolyte powder.

The pulverization may be performed by using the pulverizer described above.

[Modified Sulfide Solid Electrolyte Powder]

The modified sulfide solid electrolyte powder of the present embodiment is necessarily modified sulfide solid electrolyte powder having a degree of compaction shown by the following expression of 0.400 or more.

((Degree of compaction) = ((packed bulk density) - (aerated bulk density))/(packed bulk density))

The preferred degree of compaction has been described above.

The "modified sulfide solid electrolyte powder" means powder of the sulfide solid electrolyte after the modification, and in the description herein, the "powder" means an aggregate of powder, particles, or the like having substantially no solvent contained therein. The sulfide solid electrolyte having a particle diameter of 0.1 $\mu$m or more and 1 0.0 $\mu$m or less and an aerated bulk density of 0.050 g/cm$^3$ or more and 1.000 g/cm$^3$ or less is preferred as described above particularly from the standpoint of improving the coatability.

The modified sulfide solid electrolyte powder can be produced by fluidizing the sulfide solid electrolyte with the gas flow, and as similar to the modified sulfide solid electrolyte powder described above, preferably contains a lithium atom, a phosphorus atom, and a sulfur atom, and more preferably contains a halogen atom.

The modified sulfide solid electrolyte powder of the present embodiment has a high ionic conductivity and an excellent battery cell capability, in addition to the target particle diameter and specific surface area, and is preferably used as powder used for forming a solid electrolyte layer or an electrode layer since it is difficult to generate hydrogen sulfide.

The modified sulfide solid electrolyte powder of the present embodiment can be preferably applied to a modified sulfide solid electrolyte slurry for forming a solid electrolyte layer, as described later. There has been a modification method of a solid electrolyte by treating a sulfide solid electrolyte in the form of slurry by using a wet classifier, but not treating powder. However, it has been confirmed that the cohesive state is changed in drying and forming into powder, thereby failing to provide the same effect as in the modification in method for producing modified sulfide solid electrolyte powder of the present embodiment by the wet classifier, and the dispersibility with other materials and the coatability are deteriorated.

The modified sulfide solid electrolyte powder preferably contains an argyrodite type crystal structure, as described above.

[Modified Sulfide Solid Electrolyte Slurry]

The crystalline sulfide solid electrolyte of the present embodiment has a high ionic conductivity and an excellent battery cell capability, in addition to the target particle diameter and specific surface area, and is preferably applied to a battery cell.

The conductive species is particularly preferably a lithium atom. The crystalline sulfide solid electrolyte of the present embodiment can be used in a positive electrode layer, may be used in a negative electrode layer, or may be used in a solid electrolyte layer. The layers can be produced by the known method.

The modified sulfide solid electrolyte powder of the present application that is formed into a slurry with the solvent described above is particularly enhanced in dispersibility with other materials and coatability through the reduction of the cohesive force of the sulfide solid electrolyte. Accordingly, the modified sulfide solid electrolyte powder of the present application is preferred as powder for forming a solid electrolyte layer or an electrode layer, and the slurry of the modified sulfide solid electrolyte powder with the solvent is preferably used for forming a solid electrolyte layer or an electrode layer.

The battery cell preferably uses a collector, in addition to the positive electrode layer, the electrolyte layer, and the negative electrode layer, and the collector used may be a known material. Examples thereof include a layer of a material reacting with the crystalline sulfide solid electrolyte, such as Au, Pt, Al, Ti, or Cu, covered with Au or the like.

Examples

The present invention will be described specifically with reference to examples, but the present invention is not limited to the examples.

(1) Measurement Methods

(1-1) Particle Diameter

The particle diameter was measured by using a laser diffraction-scattering particle diameter measuring device ("Partica LA-950" (Model No.), available from Horiba, Ltd.).

In the measurement, a mixture of dehydrated toluene (guaranteed reagent, available from Wako Pure Chemical Industries, Ltd.) and dehydrated tert-butyl alcohol (guaranteed reagent, available from Wako Pure Chemical Industries, Ltd.) at a weight ratio of 93.8/6.2 was used as a dispersion medium. 50 mL of the dispersion medium was charged in the flow cell of the device, followed by circulating, to which the measurement object was then added and subjected to an ultrasonic treatment, and then the particle diameter distribution was measured.

In the particle diameter distribution, the average particle diameter ($D_{50}$) was designated as the particle diameter.

The (volume-based) average particle diameter ($D_{50}$) is a particle diameter on the particle diameter distribution cumulative curve, at which the value cumulated from the side of the particle having the smallest particle diameter reaches 50% of the total, and $D_{95}$ is a particle diameter on the particle diameter distribution cumulative curve, at which the value cumulated from the side of the particle having the smallest particle diameter reaches 95% of the total.

The amount of the measurement object added was regulated in such a manner that on the measurement screen defined in the device, the red light transmittance (R) and the blue light transmittance (B) corresponding to the particle concentration were within ranges of 80 to 90% and 70 to 90%, respectively. As the operation condition, the value used as the refractive index of the measurement object was 2.16, and the value used as the refractive index of the dispersion medium was 1.49. The particle diameter was calculated while fixing the repetition number to 15 in the setting of distribution mode.

The powder properties were measured by using "Powder Tester PT-X", available from Hosokawa Micron Corporation).

(1-2) Aerated Bulk Density

The sulfide solid electrolyte obtained in each of Examples and Comparative Examples was filled into a cylindrical container having a capacity of 100 mL through a 22-mesh sieve. After filling the sulfide solid electrolyte sufficiently over the entire upper end of the container, the upper surface of the container was scraped, and the weight of the sulfide solid electrolyte was measured and divided by the capacity of 100 mL, resulting in the aerated bulk density.

(1-3) Packed Bulk Density

The cylindrical container having the sulfide solid electrolyte filled therein having been measured for the aerated bulk density was tapped 180 times. Thereafter, the sulfide solid electrolyte was filled into the space formed by tapping through a 22-mesh sieve. After filling the sulfide solid electrolyte sufficiently over the entire upper end of the container, the upper surface of the container was scraped, and the weight of the sulfide solid electrolyte was measured and divided by the capacity of 100 mL, resulting in the packed bulk density.

(1 -4) Degree of Compaction

The degree of compaction was obtained from the aerated bulk density and the packed bulk density obtained in the sections (1-2) and (1-3) according to the following expression.

(Degree of compaction)) = ((packed bulk density) - (aerated bulk density))/(packed bulk density))

(1-5) Measurement of Ionic Conductivity

In the examples, the ionic conductivity was measured in the following manner.
The sulfide solid electrolyte was molded into a circular pellet having a diameter of 10 mm (cross sectional area S: 0.785 cm$^2$) and a height (L) of 0.1 to 0.3 cm, which was designated as a specimen. Electrode terminals were attached to the upper and lower sides of the specimen, which was measured by the alternating current impedance method (frequency range: 1 MHz to 100 Hz, amplitude: 10 mV) at 25°C to provide a Cole-Cole plot. Near the right end of the arc observed on the high frequency side region, the real part Z' ($\Omega$) at the point where -Z" ($\Omega$) became minimum was designated as the bulk resistance R ($\Omega$) of the electrolyte, and the ionic conductivity $\sigma$ (S/cm) was calculated according to the following expressions.

$$R = \rho(L/S)$$

$$\sigma = 1/\rho$$

(1-6) X-Ray Diffractometry (XRD) Measurement

The resulting sulfide solid electrolyte was measured by XRD measurement.
The powder of the precursor or the solid electrolyte produced in each of the examples was filled into a groove having a diameter of 20 mm and a depth of 0.2 mm, followed by leveling, and designated as a specimen. The specimen was measured while sealing with a Kapton film for XRD for preventing from being exposed to the air.
The measurement was performed by using a powder X-ray diffractometry device, D2 PHASER, available from Broker Corporation under the following condition.
Tube voltage: 30 kV
Tube current: 10 mA
X-Ray wavelength: Cu-K$\alpha$ line (1.5418 Å)
Optical system: convergence method
Slit configuration: solar slit 4° (for both incident side and receiving side), divergence slit: 1 mm, K$\beta$ filter (Ni plate, 0.5%), air scatter screen (using 3 mm)
Detector: semiconductor detector
Measurement range: 2$\theta$ = 10 to 60 deg
Step width, scanning speed: 0.05 deg, 0.05 deg/sec

(1-7) Evaluation of Battery Cell

(A) Production of Lithium Ion Battery Cell

100 mg of the sulfide solid electrolyte was filled into a mold having a diameter of 10 mm formed of stainless steel, smoothed to uniform the thickness of the electrolyte layer, and then press-molded by applying a pressure of 185 MPa on the upper surface of the electrolyte layer with a hydraulic pressing machine (P-6, available from Riken Kiki Co., Ltd.).

$Li_4Ti_5O_{12}$-coated $LiiNi_{0.8}Co_{0.15}Al_{0.05}O_2$ as a positive electrode active substance, the sulfide solid electrolyte of each of the examples as a solid electrolyte, and acetylene black as a conductive aid were mixed at a weight ratio of 60/35/5 to form a positive electrode material, and 8.9 mg of the positive electrode material was filled on the upper surface of the electrolyte layer, smoothed to uniform the thickness of the positive electrode layer, and then press-molded by applying a pressure of 407 MPa on the upper surface of the positive electrode layer with a hydraulic pressing machine (P-6, available from Riken Kiki Co., Ltd.).

The negative electrode material used included three plies of In foils having a diameter of 10 mm and a thickness of 0.1 mm and two plies of Li foils having a diameter of 9 mm and a thickness of 0.1 mm. The In foils and the Li foils were placed alternately on the surface of the electrolyte layer opposite to the positive electrode layer, and the assembly was press-molded by applying a pressure of 555 MPa on the upper surface of the negative electrode layer with a hydraulic pressing machine (P-6, available from Riken Kiki Co., Ltd.), so as to produce a lithium ion battery cell having a three-layer structure including the positive electrode, the solid electrolyte layer, and the negative electrode.

(B) Charge and Discharge Test

The lithium ion battery cell produced in the section (A) above was allowed to stand in a thermostat chamber set to 70°C for 24 hours, and then evaluated. The battery cell was charged to 3.63 V at 0.1 C (0.0785 mA) and discharged to 1.88 V at 0.1 C (0.0785 mA) in the first cycle, charged to 3.63 V at 0.1 C (0.0785 mA) and discharged to 1.88 V at 1.0 C (0.785 mA) in the second cycle, and charged to 3.63 V at 0.1 C (0.0785 mA) in the third cycle.

(C) Cell Resistance Rct

The cell resistance of the battery cell produced in the section (A) in the charged state was measured by the alternating current impedance method. In the Nyquist plot measured at a measurement voltage of OCV, an amplitude of 10 mV, and a frequency range of 1 MHz to 0.1 Hz, the diameter of the arc component (resistance component) was read and designated as the cell resistance Ret.

The discharged capacities in the first and second cycles and the cell resistance Ret of each of the lithium ion battery cell using the sulfide solid electrolyte of each of the examples are shown in Table 3.

(1-8) Evaluation of Coatability

The sulfide solid electrolyte and a binder were weight to make a weight ratio of 98/2, to which dehydrated butyl butyrate was gradually added while mixing with a medicine spoon, so as to provide a slurry having a solid concentration of approximately 40 to 60%. The slurry was treated with a planetary centrifugal mixer, Thinky Mixer (Awatori Rentaro) ARE-310, available from Thinky Corporation, at 2,000 rpm for 5 minutes and 2,200 rpm for 30 seconds, so as to provide a slurry for evaluating the coatability.

The slurry was dropped on the grind gauge (0 to 100 $\mu$m). available from BYK-Gardner GmbH, on the side having the deepest groove, and drawn with a scraper toward the shallow grooves to form a film. The depth of the groove at which a streak occurred was read, with which the coatability was evaluated by the following grades A to C.

A: A streak occurred at 20 $\mu$m or less.
B: A streak occurred at 50 $\mu$m or less.
C: A streak occurred at 80 $\mu$m or less.

(2) Production of Raw Material Mixture

(2-1) Production of Lithium Sulfide ($Li_2S$)

303.8 kg of toluene (available from Sumitomo Corporation) as a water-insoluble medium having been dehydrated to make a water content of 100 ppm measured with a Karl Fischer moisture meter was added to a 500 L stainless steel reaction tank, and subsequently 33.8 kg of anhydrous lithium hydroxide (available from Honjo Chemical Corporation) was added thereto, which were retained to 95°C under agitation at 131 rpm with a Twinstar agitator.

The slurry was heated to 104°C while blowing hydrogen sulfide (available from Sumitomo Seika Chemicals Co., Ltd.) thereto a supplying rate of 100 L/min. An azeotropic gas of water and toluene was continuously exhausted from the reaction tank. The azeotropic gas was dehydrated through condensation with a condenser outside the system. During the reaction, toluene was continuously supplied in the same amount of the distilled toluene, so that the reaction liquid level was retained constant.

The water content of the condensate liquid was gradually decreased, and after 24 hours from the introduction of hydrogen sulfide, the distillation of water was not confirmed. During the reaction, the solid matter was dispersed in toluene under agitation, and water separated as a layer from toluene was not observed in the reaction tank.

Thereafter, hydrogen sulfide was switched to nitrogen, which was allowed to flow 100 L/min for 1 hour.

The resulting solid matter was filtered and dried to provide $Li_2S$ in the form of white powder.

(3) Production of Sulfide Solid Electrolyte Powder

(A) Pulverization

$Li_2S$ obtained in the section (2-1) was pulverized under a nitrogen atmosphere with a pin mill having a volumetric feeder (100UPZ, available from Hosokawa Micron Corporation). The supply rate was 80 g/min, and the rotation speed of disc was 18,000 rpm.

Similarly, commercially available $P_2S_5$, LiBr (available from Honjo Chemical Corporation), and LiCl (available from Honjo Chemical Corporation) each were pulverized with the pin mill. The supply rate of $P_2S_5$ was 140 g/min, the supply rate of LiBr was 230 g/min, and the supply rate of LiCl was 250 g/min. The rotation speed of disc was 18,000 rpm in any case.

(B) Preparation of Raw Material Mixture

In a glove box with a nitrogen atmosphere, the compounds pulverized in the section (A) weighed to make a molar ratio of $Li_2S/P_2S_5$LiBr/LiCl = 47.5/12.5/15.0/25.0 and a total amount of 110 g were placed in a glass container and roughly mixed by shaking the container.

110 g of the rough mixture obtained by roughly mixing was dispersed in a mixed solvent of 1,140 mL of dehydrated toluene (available from Wako Pure Chemical Industries, Ltd.) and 7 mL of dehydrated isobutyronitrile (available from Kishida Chemical Co., Ltd.), under a nitrogen atmosphere, so as to provide a slurry of approximately 10% by mass. The slurry was mixed and pulverized with a bead mill (LMZ015, available from Ashizawa Finetech Ltd.) under the nitrogen atmosphere retained. Specifically, the bead mill was driven under condition of a circumferential speed of 12 m/s and a flow rate of 500 mL/min with the use of 456 g of zirconia beads having a diameter of 0.5 mm as the pulverization medium, and the slurry was placed in the mill and circulation operated for 1 hour. The treated slurry was placed in a nitrogen-purged Schlenk flask, and dried under reduced pressure to prepare a raw material mixture (1).

(C) Heating (Calcining) Step

30 g of the raw material mixture (1) obtained in the section (B) was dispersed in 300 mL of ethylbenzene (available from Wako Pure Chemical Industries, Ltd.) to form a slurry. The slurry was placed in an autoclave (capacity: 1,000 mL, made of stainless steel (SUS316)) equipped with an agitator and an oil bath for heating, and heat-treated at 200°C for 2 hours under agitation at a rotation number of 200 rpm. After the treatment, the solvent was distilled off by drying under reduced pressure, so as to provide a calcined product (1).

(D) Heating (Firing) Step

The calcined product (1) obtained in the section (C) was heated with an electric furnace (F-1404-A, available from Tokyo Garasu Kikai Co., Ltd.) in a glove box with a nitrogen atmosphere. Specifically, a sagger formed of $Al_2O_3$ (999-60S, available from Tokyo Garasu Kikai Co., Ltd.) was placed in the electric furnace, and was heated from room temperature to 380°C over 1 hour and retained at 380°C for 1 hour or more. Thereafter, the door of the electric furnace was opened, through which the calcined product (1) was poured into the sagger in short order, and then the door was closed, followed by heating for 1 hour. Thereafter, the sagger was taken out from the electric furnace, and gradually cooled to provide a sulfide solid electrolyte (1-1).

(E) Pulverizing Step

The resulting sulfide solid electrolyte (1-1) was dispersed in a mixed solvent of dehydrated toluene (available from Wako Pure Chemical Industries, Ltd.) and dehydrated isobutyronitrile (available from Kishida Chemical Co., Ltd.), under a nitrogen atmosphere, so as to provide a slurry of approximately 8% by mass. The slurry was mixed and pulverized with a bead mill (LMZ015, available from Asliizawa Finetech Ltd.) under the nitrogen atmosphere retained. The treated slurry was placed in a nitrogen-purged Schlenk flask, and dried under reduced pressure to prepare a sulfide solid electrolyte (1-2).

As a result of X-ray diffractometry (XRD), the XRD pattern had peaks derived from the argyrodite type crystal structure observed at $2\theta = 25.5\pm1.0$ deg, $29.9\pm1.0$ deg, and the like.

The specific surface area of the argyrodite type solid electrolyte was 14 $m^2/g$, $D_{50}$ thereof was 0.6 $\mu$m, $D_{95}$ thereof was 3.0 $\mu$m, and the ionic conductivity thereof was 4.6 mS/cm.

(Example 1)

Turboplex Classifier (Turboplex ATP, gas flow rotary vane type, available from Hosokawa Micron Corporation) was used as the dry classifier, and 100 g of the sulfide solid electrolyte (1-1) was supplied at a supply amount (supply speed) of 1.5 kg/h to a nitrogen gas (gas flow) having a dew point of-73°C and a flow rate regulated to 1.0 $m^3/min$ adapting to the flow rate of the circulated gas flow 14 in Fig. 2.

The flow rate per unit supply weight of the sulfide solid electrolyte (1-1) ((flow speed)/(supply speed)) was 40 $m^3/kg$.

As the modified sulfide solid electrolyte powder, modified sulfide solid electrolyte powder (2-1) was obtained.

The modified sulfide solid electrolyte powder (2-1) was confirmed to be an argyrodite type solid electrolyte.

A butyl butyrate slurry (3.0% by mass) of the modified sulfide solid electrolyte powder (2-1) was evaluated for the coatability with a grind gauge. The unevenness after coating (streak unevenness) was visually evaluated by A (no unevenness observed). B (unevenness observed only in small portion), C (unevenness observed partially), and D (unevenness observed overall).

(Example 2)

Modified sulfide solid electrolyte powder (2-2) was obtained in the same manner as in Example 1 except that the sulfide solid electrolyte (1-2) was used instead of the sulfide solid electrolyte (1-1), and the supply speed, the flow rate, the dew point, and the (flow speed supply speed) shown in Table 1 were used.

(Example 3)

Modified sulfide solid electrolyte powder (2-3) was obtained in the same manner as in Example 1 except that the supply speed, the flow rate, the dew point, and the (flow speed/supply speed) shown in Table 1 were used.

(Example 4)

A vortex flow (forced vortex type) classifier (vortex gas flow (with a guide blade), Microspin MP-150, available from Nippon Pneumatic Mfg. Co., Ltd.) was used, and 100 g of the sulfide solid electrolyte (1-2) was supplied at a supply amount (supply speed) of 3.2 kg/h to a nitrogen gas (gas flow) having a dew point of -53°C and a flow rate regulated to 2.2 $m^3/min$ adapting to the flow rate of the circulated gas flow 14 in Fig. 2.

The flow rate per unit supply weight of the sulfide solid electrolyte (1-2) was 41.25 $m^3/kg$.

As the modified sulfide solid electrolyte powder 13 in Fig. 2, modified sulfide solid electrolyte powder (S-1) was obtained.

The modified sulfide solid electrolyte powder (S-1) was confirmed to be an argyrodite type solid electrolyte.

(Comparative Examples 1 and 2)

The sulfide solid electrolyte (1-2) was designated as Comparative Example 1, and the sulfide solid electrolyte (1-1) was designated as Comparative Example 2.

(Comparative Example 3)

The sulfide solid electrolyte (1-2) was dispersed in 5 L of toluene as a solvent to provide a slurry of 10% by mass. The resulting slurry of the sulfide solid electrolyte (1-2) was subjected to a wet classifier (T-1 0 type Supercione, available from Murata Kogyo Co., Ltd.) under condition of a pump flow rate of 8.9 L/min (flow rate per unit supply weight of the sulfide solid electrolyte: 10.3 L/kg), an inlet port pressure of 0.32 MPaG (gauge pressure), a nozzle top diameter of 5 mm, and a bottom diameter of 2 mm, and the slurry of the top component was placed in a nitrogen-purged Schlenk flask, and dried under reduced pressure to prepare a sulfide solid electrolyte (C-1).

The conditions of Turboplex Classifier in Examples 1 to 3 are shown in Table 1.

Table 1

|  | Supply speed | Flow rate | Dew point | Flow rate/supply speed |
|---|---|---|---|---|
|  | kg/h | $m^3$/min | °C | $m^3$/kg |
| Example 1 | 1.5 | 1 | -73 | 40 |
| Example 2 | 2.0 | 1 | -51 | 30 |
| Example 3 | 2.0 | 1 | -52 | 30 |

The ionic conductivity, the particle diameter ($D_{50}$), the aerated bulk density, the packed bulk density, and the degree of compaction of the modified sulfide solid electrolyte powder (2-1) to (2-3) obtained in Examples 1 to 3, the sulfide solid electrolytes (1-2) and (1-1) designated as Comparative Examples 1 and 2, and the sulfide solid electrolyte (C-1) obtained in Comparative Example 3 are shown in Table 2, and the battery cell discharge capacity, the battery cell discharge capacity, the cell resistance Ret, and the evaluation of coatability thereof are shown in Table 3. In the tables, "-" means unmeasured.

Table 2

|  | Ionic conductivity | Particle diameter ($D_{50}$) | Aerated bulk density | Packed bulk density | Degree of compaction |
|---|---|---|---|---|---|
|  | mS/cm | $\mu$m | $g/cm^3$ | $g/cm^3$ |  |
| Example 1 | 9.5 | 3.3 | 0.271 | 0.562 | 0.518 |
| Example 2 | 4.6 | 0.8 | 0.211 | 0.419 | 0.496 |
| Example 3 | 6.0 | 4.4 | 0.276 | 0.564 | 0.511 |
| Comparative Example 1 | 6.2 | 1.4 | 0.367 | 0.588 | 0.376 |
| Comparative Example 2 | 6.2 | 14.9 | 0.486 | 0.715 | 0.320 |
| Comparative Example 3 | 5.6 | 1.2 | 0.357 | 0.553 | 0.354 |

Table 3

|  | Battery cell discharge capacity (0.1 mA/cm$^2$) | Battery cell discharge capacity (1.0 mA/cm$^2$) | Cell resistance Ret | Evaluation of coatability |
|---|---|---|---|---|
|  | mAh/g | mAh/g | $\Omega$ |  |
| Example 1 | - | - | - | A |
| Example 2 | 165.6 | 148.9 | 29.2 | A |
| Example 3 | - | - | - | A |
| Comparative Example 1 | 152.9 | 136.0 | 91.9 | C |
| Comparative Example 2 | - | - | - | C |
| Comparative Example 3 | 161.3 | 144.8 | 33.1 | B |

It is confirmed from the results described above that any of the modified sulfide solid electrolyte powder produced by the production method of the present invention is enhanced in coatability. It is understood that the increase of the degree of compaction by the modification of the method for producing modified sulfide solid electrolyte powder of the present embodiment allows the coatability to be excellent while Examples 2 and 3 are different in particle diameter.

Comparative Examples 1 and 2 are the solid electrolytes that are before the modification of the method for producing modified sulfide solid electrolyte powder of the present embodiment in Examples 1 to 3, and it is understood that these are inferior in coatability to Examples due to the cohesion of the solid electrolyte. Furthermore, it is understood that even through the classification is performed by wet classification shown in Comparative Example 3, which is different from Examples, the degree of compaction is still low irrespective of the reduction of the average particle diameter ($D_{50}$), and thus the coatability thereof is inferior to Examples. The lithium ion battery cell produced by using the modified sulfide solid electrolyte powder obtained in Example 2 has excellent battery cell characteristics, as compared to the lithium ion battery cells obtained by using the sulfide solid electrolytes obtained in Comparative Examples 1 and 3. It is considered that the mechanism therefor is that the enhancement of the dispersibility of the sulfide solid electrolyte increases the interface between the electrolyte and the active substance, resulting in the increase of the discharge capacity and the reduction of the cell resistance.

Industrial Applicability

The method for producing modified sulfide solid electrolyte powder of the present embodiment can produce crystalline sulfide solid electrolyte that has a high ionic conductivity and is excellent in battery cell capability. The crystalline sulfide solid electrolyte obtained by the method for producing modified sulfide solid electrolyte powder of the present embodiment and the slurry using the same can be favorably applied to battery cells, particularly to battery cells used in information-related instruments and communication instruments, such as personal computers, video cameras, and mobile phones.

Reference Sign List

1: Dry classifier
2: Bag filter
10: Sulfide solid electrolyte and gas flow
11: Modified sulfide solid electrolyte powder and gas flow
12: Coarse particles
13: Modified sulfide solid electrolyte powder
14: Circulated gas flow

**Claims**

1. A method for producing modified sulfide solid electrolyte powder, comprising using a dry classifier, supplying a sulfide solid electrolyte to a gas flow having a dew point of -40°C or less and a flow rate of 1 m$^3$/kg or more and 100 m$^3$/kg or less per unit supply weight of the sulfide solid electrolyte inside the dry classifier, and fluidizing the sulfide solid electrolyte with the gas flow.

2. The method for producing modified sulfide solid electrolyte powder according to claim 1, wherein the method for producing modified sulfide solid electrolyte powder comprises pulverizing the sulfide solid electrolyte.

3. The method for producing modified sulfide solid electrolyte powder according to claim 1 or 2, wherein the sulfide solid electrolyte is supplied in the form of powder to the gas flow.

4. The method for producing modified sulfide solid electrolyte powder according to any one of claims 1 to 3, wherein the method for producing modified sulfide solid electrolyte powder further comprises mixing a solid electrolyte raw material in a solvent to provide a raw material mixture, and heat-treating the raw material mixture.

5. The method for producing modified sulfide solid electrolyte powder according to any one of claims 1 to 4, wherein the modified sulfide solid electrolyte powder is powder used for forming a solid electrolyte layer or an electrode layer.

6. The method for producing modified sulfide solid electrolyte powder according to any one of claims 1 to 5, wherein the gas flow is circulated.

7. The method for producing modified sulfide solid electrolyte powder according to any one of claims 1 to 6, wherein the modified sulfide solid electrolyte powder is powder of a solid electrolyte containing a lithium atom, a phosphorus atom, and a sulfur atom.

8. The method for producing modified sulfide solid electrolyte powder according to claim 7, wherein the modified sulfide solid electrolyte powder is powder of a solid electrolyte further containing a halogen atom.

9. The method for producing modified sulfide solid electrolyte powder according to any one of claims 1 to 8, wherein the modified sulfide solid electrolyte powder contains an argyrodite type crystal structure.

10. The method for producing modified sulfide solid electrolyte powder according to any one of claims 1 to 9, wherein the gas flow is a gas flow of an inert gas.

11. The method for producing modified sulfide solid electrolyte powder according to any one of claims 1 to 10, wherein the modified sulfide solid electrolyte powder has a particle diameter of 0.1 $\mu$m or more and 10.0 $\mu$m or less.

12. The method for producing modified sulfide solid electrolyte powder according to any one of claims 1 to 11, wherein the modified sulfide solid electrolyte powder has a degree of compaction shown by the following expression of 0.400 or more:

((Degree of compaction) = ((packed bulk density)-(aerated bulk density))/(packed bulk density))

13. The method for producing modified sulfide solid electrolyte powder according to any one of claims 1 to 12, wherein the modified sulfide solid electrolyte powder has an aerated bulk density of 0.050 g/cm$^3$ or more and 1.000 g/cm$^3$ or less.

14. Modified sulfide solid electrolyte powder having a degree of compaction shown by the following expression of 0.400 or more:

((Degree of compaction) = ((packed bulk density)-(aerated bulk density)/(packed bulk density))

15. The modified sulfide solid electrolyte powder according to claim 14, wherein the modified sulfide solid electrolyte powder has an aerated bulk density of 0.050 g/cm$^3$ or more and 1.000 g/cm$^3$ or less.

16. The modified sulfide solid electrolyte powder according to claim 14 or 15, wherein the modified sulfide solid electrolyte powder has a particle diameter of 0.1 $\mu$m or more and 10 $\mu$m or less.

17. The modified sulfide solid electrolyte powder according to any one of claims 14 to 16, wherein the modified sulfide solid electrolyte powder contains an argyrodite type crystal structure.

18. A modified sulfide solid electrolyte slurry for forming a solid electrolyte layer or an electrode layer, comprising the modified sulfide solid electrolyte powder according to any one of claims 14 to 17.

[Fig. 1]

Solid electrolyte raw material $\xrightarrow[\text{Mixing}]{\text{Solvent}}$ Raw material mixture $\xrightarrow{\text{Heat treatment}}$

Sulfide solid electrolyte $\xrightarrow{\text{Pulverization}}$

$\xrightarrow[\text{Flow rate: 1 to 100 m}^3\text{/kg}]{\text{Dry classifier}}$ Modified sulfide solid electrolyte powder

$\longrightarrow$ Sulfide solid electrolyte slurry $\longrightarrow$ Solid electrolyte layer or electrode layer

[Fig. 2]

<table>
<tr><td colspan="2" align="center">**INTERNATIONAL SEARCH REPORT**</td><td>International application No.<br>**PCT/JP2022/025217**</td></tr>
</table>

**A. CLASSIFICATION OF SUBJECT MATTER**

***H01B 13/00***(2006.01)i; ***C01B 25/14***(2006.01)i; ***H01B 1/06***(2006.01)i; ***H01B 1/10***(2006.01)i
FI:  H01B13/00 Z; C01B25/14; H01B1/06 A; H01B1/10

According to International Patent Classification (IPC) or to both national classification and IPC

**B. FIELDS SEARCHED**

Minimum documentation searched (classification system followed by classification symbols)

H01B13/00; C01B25/14; H01B1/06; H01B1/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-143299 A (IDEMITSU KOSAN CO., LTD.) 22 July 2013 (2013-07-22) paragraphs [0012], [0053], [0065], [0072]-[0085] | 14-18 |
| A | | 1-13 |
| A | JP 2009-280466 A (GS YUASA CORP.) 03 December 2009 (2009-12-03) paragraphs [0052]-[0060] | 1-13 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/025217**

| Patent document cited in search report | Publication date (day/month/year) | Patent family member(s) | Publication date (day/month/year) |
|---|---|---|---|
| JP 2013-143299 A | 22 July 2013 | (Family: none) | |
| JP 2009-280466 A | 03 December 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017216062 A